# EUROPÄISCHE PATENTANMELDUNG

(11) **EP 0 950 674 A1**
(43) Veröffentlichungstag der Anmeldung: **20.10.1999**
(21) Anmeldenummer: 99107087.1
(22) Anmeldetag: 12.04.1999
(51) Int. Cl.: C08G 18/32, C08G 18/66, C08G 18/10

(54) **Verfahren zur Herstellung von thermoplastischen Polyurethanen**

(30) Priorität: 15.04.1998 DE 19816525
(71) Anmelder: BASF AKTIENGESELLSCHAFT, 67056 Ludwigshafen (DE)
(72) Erfinder: Servay, Thomas Dr., 67550 Worms (DE); Leberfinger, Marcus Dr., 49074 Osnabrück (DE); Nitschke, Dieter, 49449 Quernheim (DE)

(57) **Zusammenfassung**

Verfahren zur Herstellung von Polyisocyanat-Polyadditionsprodukten durch Umsetzung von (a) Isocyanaten mit (b) gegenüber Isocyanaten reaktiven Verbindungen mit einem Molekulargewicht von 451 bis 8000 in Gegenwart von (c) Kettenverlängerungsmitteln und gegebenenfalls (d) Vernetzungsmitteln, (e) Katalysatoren und/oder (f) üblichen Hilfs- und/oder Zusatzstoffen, dadurch gekennzeichnet, daß man als (c) Kettenverlängerungsmittel 1,3- und/oder 1,2-Propandiol einsetzt und die Umsetzung bei einer Kennzahl von ≥104 durchführt.

## Beschreibung

Die Erfindung bezieht sich auf Verfahren zur Herstellung von Polyisocyanat-Polyadditionsprodukten durch Umsetzung von (a) Isocyanaten mit (b) gegenüber Isocyanaten reaktiven Verbindungen mit einem Molekulargewicht von 451 bis 8000 in Gegenwart von (c) Kettenverlängerungsmitteln und gegebenenfalls (d) Vernetzungsmittel, (e) Katalysatoren und/oder (f) üblichen Hilfs- und/oder Zusatzstoffen sowie die mit diesem Verfahren herstellbaren Polyisocyanat-Polyadditionsprodukte. Insbesondere betrifft die Erfindung Verfahren zur Herstellung von thermoplastischen Polyisocyanat-Polyadditionsprodukten durch Umsetzung von (a) Isocyanaten mit (b) gegenüber Isocyanaten reaktiven Verbindungen mit einem Molekulargewicht von 451 bis 8000 und einer mittleren Funktionalität von 1,8 bis 2,6 in Gegenwart von (c) Kettenverlängerungsmitteln, (e) Katalysatoren und/oder (f) üblichen Hilfs- und/oder Zusatzstoffen sowie die derart erhältlichen thermoplastischen Produkte.

Polyisocyanat-Polyadditonsprodukte und Verfahren zu deren Herstellung sind allgemein bekannt und vielfältig beschrieben. Eine Teilgruppe dieser Polyadditionsprodukte stellen die thermoplastische Polyisocyanat-Polyadditionsprodukte, im allgemeinen auch als thermoplastische Polyurethane (TPU) bezeichnet, dar. Diese TPUs sind teilkristalline Werkstoffe und gehören zu der Klasse der thermoplastischen Elastomere. Sie bestehen aus einem teilkristallinen Hartblock, der sich aus dem Isocyanat und niedermolekularen Kettenverlängerer aufbaut, und einem amorphen Weichblock, der typischerweise aus den höhermolekularen gegenüber Isocyanaten reaktiven Verbindungen, üblicherweise Polyester- und/oder Polyetherdiolen, aufgebaut wird. Eine möglichst gute mikromorphologische Entmischung dieser Phasen ist die notwendige Voraussetzung für das elastische Verhalten der TPUs. Der Hartblock wirkt aufgrund seiner Teilkristallinität als physikalische Vernetzung, die sich oberhalb des Hartblockschmelzpunktes reversibel auflöst, was die thermoplastische Verformung des Materials ermöglicht. Der Weichblock befindet sich bei Raumtemperatur in einem plastischen oder flüssigen Zustand, auf ihn läßt sich letztendlich die leichte Verformbarkeit des TPUs zurückführen. Die physikalische Vernetzung ermöglicht dabei die elastische Rückkehr in den Ausgangszustand.

Die TPUs zeichnen sich durch eine Kombination von vorteilhaften Stoffeigenschaften, wie beispielsweise einem geringen Abrieb, einer guten Chemikalienbeständigkeit sowie einer hohen Flexibilität bei einer gleichzeitig hohen Festigkeit aus. Zusätzlich bieten sie Vorteile durch die kostengünstige Herstellung, beispielsweise mit dem Band- oder dem Extruderverfahren, die kontinuierlich oder diskontinuierlich durchgeführt werden können, und die einfache Thermoplastverarbeitung.

Durch Variation der Ausgangskomponenten lassen sich Produkte mit einer breiten Eigenschaftspalette in einem weiten Härtebereich herstellen. Die Wärmeformbeständigkeit und damit auch die Gebrauchseigenschaften des Materials bei Temperaturen vor allem oberhalb von 80 °C werden überwiegend durch das Schmelzverhalten des Hartsegmentblocks, also der Qualität der physikalischen Vernetzung, bestimmt.

Thermoplastische Polyurethane, die auf Basis von (a) MDI, (b) Polyester- und/oder Polyetherdiolen und (c) Butandiol hergestellt werden, verlieren oberhalb von 80 °C teilweise ihre Wärmeformbeständigkeit, das heißt, das Material kehrt nicht mehr reversibel in seinen Ausgangszustand zurück. Um TPUs unter statischer oder dynamischer Belastung bei höheren Anwendnungstemperaturen einsetzen zu können muß die Wärmeformbeständigkeit des Materials im Vergleich zu bekannten TPUs verbessert werden.

Zur Verbesserung des Elastizitätsmoduls von TPUs insbesondere bei hohen Temperaturen wurde bereits 1,3-Propandiol als Kettenverlängerer beschrieben, wobei die TPUs bei einer Kennzahl von 102 hergestellt wurden (Forschner et al., Polyurethane World Congress 1997, Seite 371). Die Verbesserung des Elastizitätsmoduls bei derartig hergestellten TPUs ist allerdings weiterhin nicht befriedigend, so daß nach weiteren Möglichkeiten zur Verbesserung der Wärmeformbeständigkeit gesucht werden mußte.

In weiteren Schriften wird eine Verbesserung der Wärmestandfestigkeit von TPUs (EP-A 718 335) bzw. eine verbesserte Dimensionsstabilität von TPU-Fasern unter Last bei hohen Temperaturen (IT-A 733 216) beschrieben. In der EP-A 718 335 werden zur Erreichung dieses Ziels aromatische Kettenverlängerer in Kombination mit Alkandiolen mit 4 bis 44 Kohlenstoffatomen offenbart. IT-A 733 216 beschreibt den Einsatz von verschiedenen Kettenverlängerungsmitteln, unter anderem auch 1,3-Propandiol und 1,4-Bis-(hydroxymethyl)-benzol bei einer Kennzahl von 98 bis 102. Beiden technischen Lehren ist gemein, daß die Wärmestandfestigkeit zwar erhöht werden konnte, höchsten Ansprüchen aber nicht genügt.

Ziel der vorliegenden Erfindung war es somit, Verfahren zur Herstellung von Polyisocyanat-Polyadditionsprodukten, insbesondere thermoplastischen Polyisocyanat-Polyadditionsprodukten, im Folgenden auch als thermoplastische Polyurethane, abgekürzt TPU, bezeichnet, durch die eingangs beschriebenen Umsetzungen zu entwickeln, mit denen Produkte mit einer verbesserten, d.h. erhöhten Wärmeformbeständigkeit zugänglich sind.

Diese Aufgabe konnte dadurch gelöst werden, daß man als (c) Kettenverlängerungsmittel 1,3- und/oder 1,2-Propandiol bevorzugt 1,3-Propandiol einsetzt und die Umsetzung bei einer Kennzahl von ≥104 durchführt.

Bevorzugt wird das erfindungsgemäße Verfahren zur Herstellung von TPUs eingesetzt. Verfahren zur Herstellung von TPUs sind allgemein bekannt und unterscheiden sich von Verfahren zur Herstellung von nicht thermoplastisch verarbeitbaren Polyisocyanat-Polyadditionsprodukten hauptsächlich dadurch, daß man chemische Vernetzungen in dem Produkt weitgehend vermeidet und somit als gegenüber Isocyanaten reaktive Verbindungen (b) solche einsetzt, die eine mittlere Funktionalität von 1,8 bis 2,6, bevorzugt 1,9 bis 2,2, besonders bevorzugt 2 aufweisen, und bevorzugt auf Vernetzungsmittel, d.h. gegenüber Isocyanaten reaktive Verbindungen mit einem Molekulargewicht ≤§450 und einer Funktionalität von ≥§3 weitgehend, besonders bevorzugt vollständig verzichtet.

Als Kettenverlängerungsmittel wird erfindungsgemäß 1,3- und/oder 1,2-Propandiol, bevorzugt 1,3-Propandiol eingesetzt.

Bevorzugt können als (c) zusätzlich zum 1,3- und/oder 1,2-Propandiol, bevorzugt 1,3-Propandiol, mindestens ein aromatischer Kettenverlängerer, d.h. mindestens eine Verbindung mit einem Molekulargewicht von §≤§450 g/mol, zwei gegenüber Isocyanaten reaktiven Gruppen und mit mindestens einem aromatischen System im Molekül, eingesetzt werden.

Das molare Verhältnis von 1,3- und/oder 1,2-Propandiol zu der oder den Verbindungen (b) beträgt üblicherweise 0,1 : 1 bis 8 : 1, bevorzugt 1 : 1 bis 4 : 1.

Bevorzugt können als aromatische Kettenverlängerer 1,4-Bis-(hydroxymethyl)-benzol (BHMB), 1,3-Bis-(hydroxymethyl)-benzol, 1,2-Bis-(hydroxymethyl)-benzol, 1,2-Bis-(2-hydroxyethoxy)-benzol, 1,3-Bis-(2-hydroxyethoxy)-benzol, 1,4-Bis-(2-hydroxyethoxy)-benzol (HQEE), Diester der Terephthalsäure mit Alkandiolen mit 2 bis 4 Kohlenstoffatomen, wie z.B. Terephthalsäure-bis-ethandiol oder -butandiol-1,4, aromatische Diamine, wie z.B 2,4- und 2,6-Toluylen-diamin, 3,5-Diethyl-2,4- und -2,6-toluylendiamin und primäre, ortho-di-, -tri- und/oder -tetraalkylsubstituierte 4,4'-Diamino-diphenylmethane, Piperazin und/oder Mischungen enthaltend mindestens zwei der genannten aromatischen Kettenverlängerer eingesetzt werden.

Besonders bevorzugt wird 1,4-Bis-(hydroxymethyl)-benzol als aromatischer Kettenverlängerer eingesetzt.

Das molare Verhältnis von aromatischen Kettenverlängerern zu 1,3-und/oder 1,2-Propandiol beträgt üblicherweise 0,01:1 bis 1:1, bevorzugt 0,05:1 bis 0,55:1.

Zusätzlich zu den genannten Kettenverlängerern können gegebenenfalls weitere, allgemein bekannte Kettenverlängerer (c) eingesetzt werden, die an späterer Stelle beispielhaft beschrieben werden. Bevorzugt werden als Kettenverlängerer ausschließlich 1,2- und/oder 1,3-Propandiol gegebenenfalls zusammen mit mindestens einem aromatischen Kettenverlängerer eingesetzt.

Zur Einstellung von Härte und Schmelzpunkt der TPUs können die Aufbaukomponenten (b) und (c) in relativ breiten molaren Verhältnissen variiert werden. Bewährt haben sich molare Verhältnisse von Komponente (b) zu insgesamt einzusetzenden Kettenverlängerungsmitteln (c) von 1 : 0,5 bis 1 : 12, insbesondere von 1 : 1 bis 1 : 6,4, wobei die Härte und der Schmelzpunkt der TPUs mit zunehmendem Gehalt an Diolen ansteigt.

Erfindungsgemäß wird die Umsetzung bei einer Kennzahl von ≥§104, bevorzugt 104 bis 120, besonders bevorzugt 105 bis 110 durchgeführt. Die Kennzahl ist definiert durch das Verhältnis der insgesamt bei der Umsetzung eingesetzten Isocyanatgruppen der Komponente (a) zu den gegenüber Isocyanaten Gruppen, d.h. den aktiven Wasserstoffen, der Komponenten (b), (c) und gegebenenfalls (d). Bei einer Kennzahl von 100 kommt auf eine Isocyanatgruppen der Komponente (a) ein aktives Wasserstoffatom, d.h. eine gegenüber Isocyanaten reaktive Funktion, der Komponenten (b), (c) und gegebenenfalls (d).

Der Isocyanatindex, auch Kennzahl genannt, ist die tatsächlich eingesetzte Menge an Isocyanatgruppen dividiert durch die theoretisch zur vollständigen Umsetzung aller OH-Gruppen notwendigen Menge an Isocyanatgruppen multipliziert mit 100.

Im Folgenden sollen beispielhaft die Ausgangskomponenten und Verfahren zur Herstellung der bevorzugten TPUs dargestellt werden.

Die bei der Herstellung der TPUs üblicherweise verwendeten Komponenten (a), (b), (c) sowie gegebenenfalls (e) und/oder (f) sollen im Folgenden beispielhaft beschrieben werden:
a) Als organische Isocyanate (a) kommen vorzugsweise aliphatische, cycloaliphatische und insbesondere aromatische Diisocyanate in Betracht. Im einzelnen seien beispielhaft genannt: aliphatische Diisocyanate, wie Hexamethylen-diisocyanat-1,6, 2-Methyl-pentamethylen-diisocyanat-1,5, 2-Ethylbutylen-diisocyanat-1,4 oder Mischungen aus mindestens 2 der genannten C₆-Alkylen-diisocyanate, Pentamethylen-diisocyanat-1,5 und Butylen-diisocyanat-1,4, cycloaliphatische Diisocyanate, wie 1-Isocyanato-3,3,5-trimethyl-5-isocyanatomethyl-cyclohexan (Isophoron-diisocyanat), 1,4- und/oder 1,3-Bis(isocyanatomethyl)cyclohexan (HXDI), 1,4-Cyclohexandiisocyanat, 1-Methyl-2,4- und -2,6-cyclohexan-diisocyanat sowie die entsprechenden Isomerengemische, 4,4'-, 2,4'- und 2,2'-Dicyclohexylmethan-diisocyanat sowie die entsprechenden Isomerengemische und vorzugsweise aromatische Diisocyanate, wie 2,4-Toluylen-diisocyanat, Gemische aus 2,4- und 2,6-Toluylen-diisocyanat, 3,3'-Dimethyl-4,4'-biphenyldiisocyanat (TODI), p-Phenylendiisocyanat (PDI), m-, p-Xylylendiisocyanat (XDI), 4,4'-, 2,4'- und 2,2'-Diphenylmethan-diisocyanat (MDI), Gemische aus 2,4'- und 4,4'-Diphenylmethandiisocyanat, urethanmodifizierte flüssige 4,4'- und/oder 2,4'-Diphenylmethan-diisocyanate, 4,4'-Diisocyanato-diphenylethan- (1,2) (EDI) und 1,5-Naphthylen-diisocyanat. Vorzugsweise verwendet werden Hexamethylen-diisocyanat-1,6, 4,4'-Diphenylmethan-diisocyanat, p-Phenylendiisocyanat (PDI), 4,4'-Diisocyanato-diphenylethan- (1,2) (EDI), 1,5-Naphthylendiisocyanat, 3,3'-Dimethyl-4,4'-biphenyldiisocyanat (TODI).
b) Als gegenüber Isocyanaten reaktive Verbindungen (b) können beispielsweise Polyhydroxylverbindungen mit Molekulargewichten von 451 bis 8000, bevorzugt 600 bis 6000, insbesondere 800 bis 4000, und einer mittleren Funktionalität von 1,8 bis 2,6, bevorzugt 1,9 bis 2,2, insbesondere 2 eingesetzt werden. Bevorzugt setzt man als (b) Polyetherole und/oder Polyesterole ein, besonders bevorzugt Polyetherdiole und/oder Polyesterdiole.
   In Betracht kommen jedoch auch hydroxylgruppenhaltige Polymere, beispielsweise Polymethacrylatdiole, Polydimethylsiloxanpolyole, hydroxylgruppenhaltige Polyethylen-butlylencopolymere, hydroxylgruppenhaltige hydrierte Polyisoprene, Polyacetale, wie Polyoxymethylene und wasserunlösliche Formale, z.B. Polybutandiolformal und Polyhexandiolformal, und aliphatische Polycarbonate, insbesondere solche, und Hexandiol-1,6, hergestellt durch Umesterung, mit den oben genannten Molekulargewichten. Die genannten Verbindungen können als Einzelkomponenten oder in Form von Mischungen zur Anwendung kommen.
   Die Mischungen zur Herstellung der TPUs bzw. die TPUs müssen zumindest überwiegend auf difunktionellen gegenüber Isocyanaten reaktiven Substanzen basieren. Die mit diesen Mischungen hergestellten TPUs sind somit vorwiegend unverzweigt, d.h. überwiegend nicht vernetzt, aufgebaut.
   Geeignete Polyetherole können hergestellt werden nach bekannten Verfahren, beispielsweise durch Anlagerung von Alkylenoxiden an mindestens ein Startermolekül, das 2 reaktive Wasserstoffatome gebunden enthält, bevorzugt in Gegenwart von bekannten Katalysatoren, beispielsweise Alkalihydroxiden, wie Natrium- oder Kaliumhydroxid, oder Alkalialkoholaten, wie Natriummethylat, Natrium- oder Kaliumethylat oder Kaliumisopropylat, Lewis-Säuren, wie Antimonpentachlorid, Borfluorid-Etherat, Bleicherde, basischen Salzen des Cäsiums, z.B. Cäsiumhydroxyd, und/oder basischen Salzen und/oder Hydroxiden von Erdalkalimetallen. Bevorzugt können als Katalysatoren bei der Alkoxylierung Cäsiumhydroxyd und/oder Calciumhydroxyd eingesetzt werden, um Polyetherpolyole mit einem geringen Gehalt an ungesättigten Einheiten zu erreichen. Als Alkylenoxide seien z.B. genannt: Ethylenoxid, 1,2-Propylenoxid, Tetrahydrofuran, 1,2- und 2,3-Butylenoxid. Vorzugsweise Anwendung finden Ethylenoxid und Mischungen aus Propylenoxid-1,2 und Ethylenoxid. Die Alkylenoxide können einzeln, alternierend nacheinander oder als Mischung verwendet werden. Als Startermolekül kommen beispielsweise in Betracht: Wasser, Aminoalkohole, wie N-Alkyl-dialkanolamine, beispielsweise N-Methyl-diethanolamin und bevorzugt Diole, z.B. Alkandiole oder Dialkylenglykole mit 2 bis 12 C,Atomen, vorzugsweise 2 bis 6 C-Atomen, wie Ethandiol, Propandiol-1,3, Butandiol-1,4 und Hexandiol-1,6. Gegebenenfalls können auch Mischungen von Startermolekülen eingesetzt werden. Geeignete Polyetherole sind ferner die hydroxylgruppenhaltigen Polymerisationsprodukte des Tetrahydrofurans (Polyoxytetramethylen-glykole). Vorzugsweise verwendet werden Polyetherole hergestellt mit Propylenoxid-1,2 und Ethylenoxid, in denen mehr als 50 %, vorzugsweise 60 bis 100 % der OH-Gruppen primäre Hydroxylgruppen sind und bei denen zumindest ein Teil des Ethylenoxids als endständiger Block angeordnet ist und insbesondere Polyoxytetramethylenglykole (Polytetrahydrofuran). Solche Polyetherole können erhalten werden, indem man z.B. an das Startermolekül zunächst das Propylenoxid-1,2 und daran anschließend das Ethylenoxid polymerisiert oder zunächst das gesamte Propylenoxid-1,2 im Gemisch mit einem Teil des Ethylenoxids copolymerisiert und den Rest des Ethylenoxids anschließend anpolymerisiert oder schrittweise zunächst einen Teil des Ethylenoxids, dann das gesamte Propylenoxid-1,2 und dann den Rest des Ethylenoxids an das Startermolekül anpolymerisiert.
   Die Startersubstanzen und die Katalysatoren kann man, vorzugsweise nach dem Entfernen von eventuell anwesendem Wasser bei erhöhter Temperatur und vermindertem Druck, in einem üblichen Reaktor oder Autoklaven, beispielsweise einem Rührkesselreaktor oder Rohrreaktoren mit üblichen Einrichtungen zur Kühlung des Reaktionsgemisches, mit dem Propylenoxid und gegebenenfalls weiteren Alkylenoxiden umsetzen. Üblicherweise wird der Katalysator in einer Menge von 0 bis 10 ppm, bezogen auf die Gesamtrezeptur, in dem Reaktionsgemisch eingesetzt. Die Alkoxylierung wird vorzugsweise bei einer Temperatur des Reaktionsgemisches innerhalb eines Bereiches von 70°C bis 150°C, besonders bevorzugt 80°C bis 105°C, durchgeführt. Die Reaktion führt man bei allgemein bekannten Drücken durch. Die Alkylenoxide können in der Regel über eine Zeit von 4 bis 20 Stunden zu dem Reaktionsgemisch zugegeben werden, je nach dem gewünschten Molekulargewicht des Polyols. Vorzugsweise kann Propylenoxid zu Beginn der Umsetzung so zugesetzt werden, daß ein Block von Polyoxypropyleneinheiten mit einem Molekulargewicht von mindestens 700 g/mol an die Startersubstanzen angelagert wird. Die Reaktionszeit kann 1 bis 8 Stunden betragen, wobei vorzugsweise eine vollständige Umsetzung der Alkylenoxide gewährleistet werden kann. Nach vollständigem Umsatz des beispielsweise Propylenoxides und gegebenenfalls weiteren Alkylenoxiden können anschließend besonders bevorzugt an das Polyol terminal durch Zugabe von Ethylenoxid Polyoxyethyleneinheiten angelagert werden. Anschließend wird das Reaktionsgemisch in der Regel abgekühlt, vorzugsweise unter vermindertem Druck und in bekannter Weise aufgearbeitet. Beispielsweise kann der Cäsiumkatalysator durch Adsorption an z.B. Silikate und anschließender Filtration aus dem Polyol entfernt werden. Alternativ können die basischen Katalysatorsalze, beispielsweise die genannten Hydroxyde neutralisiert, z.B. durch eine geeignete Säure wie beispielsweise Phosphorsäure, und in dem Polyol belassen werden. Den Polyolen können anschließend bekannte Stabilisierungsmittel, z.B. gegen Oxidation, zugegeben werden.
   Die Polyetherole weisen bevorzugt eine Unsättigung von kleiner 0,07, bevorzugt 0,001 bis 0,05, besonders bevorzugt 0,001 bis 0,04, insbesondere 0,001 bis 0,01 meq/g auf. Die Unsättigung, die üblicherweise in meq pro g Polyetherpolyalkohol angegebenen wird, kann durch allgemein bekannte Verfahren, beispielsweise durch das bekannte Verfahren nach Kaufmann durch Bromierung der Doppelbindungen und anschließender Titration mit Jod, erfolgen. Die Einheit meq/g entspricht in der Regel dem Gehalt an Doppelbindungen in mmol pro g Polyetherpolyalkohol.
   Geeignete Polyesterole können beispielsweise aus Dicarbonsäuren mit 2 bis 12 Kohlenstoffatomen, vorzugsweise 4 bis 8 Kohlenstoffatomen, und mehrwertigen Alkoholen hergestellt werden. Als Dicarbonsäuren kommen beispielsweise in Betracht: aliphatische Dicarbonsäuren, wie Bernsteinsäure, Glutarsäure, Korksäure, Azelainsäure, Sebacinsäure und vorzugsweise Adipinsäure und aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Desgleichen sind Mischungen aus aromatischen und aliphatischen Dicarbonsäuren einsetzbar. Zur Herstellung der Polyesterole kann es gegebenenfalls vorteilhaft sein, anstelle der Dicarbonsäuren die entsprechenden Dicarbonsäurederivate, wie Dicarbonsäureester mit 1 bis 4 Kohlenstoffatomen im Alkoholrest, Dicarbonsäureanhydride oder Dicarbonsäurechloride zu verwenden. Beispiele für mehrwertige Alkohole sind Alkandiole mit 2 bis 10, vorzugsweise 2 bis 6 Kohlenstoffatomen, wie Ethandiol, Propandiol-1,3, Butandiol-1,4, Pentandiol-1,5, Hexandiol-1,6, Decandiol-1,10, 2,2-Dimethylpropandiol-1,3, 3,3-Dimethylpentan-1,5-diol, Propandiol-1,2 und Dialkylenether-glykole wie Diethylenglykol und Dipropylenglykol. Je nach den gewünschten Eigenschaften können die mehrwertigen Alkohole allein oder gegebenenfalls in Mischungen untereinander verwendet werden.
   Geeignet sind ferner Ester der Kohlensäure mit den genannten Diolen, insbesondere solchen mit 4 bis 6 Kohlenstoffatomen, wie Butandiol-1,4 und/oder Hexandiol-1,6, Kondensationsprodukte von ω-Hydroxycarbonsäuren, beispielsweise (ω-Hydroxycapronsäure und vorzugsweise Polymerisationsprodukte von Lactonen, beispielsweise gegebenenfalls substituierten ω-Caprolactonen.
   Als Polyesterole vorzugsweise verwendet werden Alkandiolpolyadipate mit 2 bis 6 Kohlenstoffatomen im Alkylenrest, wie z.B. Ethandiol-polyadipate, 1,4-Butandiol-polyadipate, Ethandiol-butandiol-1,4-polyadipate, 1,6-Hexandiol-neopentylglykol-polyadipate, 3,3-Dimethyl-1,5-pentandiol-polyadipate, Poly(ε-caprolacton) und insbesondere 1,6-Hexandiol-1,4-butandiol-polyadipate.
c) Als gegebenenfalls zusätzlich zu den erfindungsgemäßen Kettenverlängerungsmitteln einzusetzende Kettenverlängerungsmittel (c), die üblicherweise Molekulargewichte von §≤§450 g/mol, vorzugsweise 60 bis 300 aufweisen, kommen vorzugsweise Alkandiole mit 2 bis 12 Kohlenstoffatomen, vorzugsweise mit 2, 4, 6 oder 8 Kohlenstoffatomen, wie z.B. Ethandiol, Hexandiol-1,6, 1,4-Cyclohexandiol, 1,4-Bishydroxymethylcyclohexandiol, Isosorbid (1,4:3,6-Dianhydro-D-sorbit), 3-(Hydroxymethyl)-5-nitrobenzylalkohol, Pyridindimethanol, 1,4-Bishydroxymethylcyclohexandiol und insbesondere Butandiol-1,4 und Dialkylenetherglykole wie z.B. Diethylenglykol und Dipropylenglykol in Betracht. Geeignet sind jedoch auch Dicarbonsäuren, wie Adipinsäure, Malonsäure, Oktandisäure, Terephthalsäure und (cyclo)aliphatische Diamine, wie z.B. Piperazin, 4,4'-Diaminodicyclohexylmethan, 3,3'-Dimethyl-4,4'-diaminodicyclohexylmethan, 1-Amino-3,3,5-trimethyl-5-aminomethyl-cyclohexan, Ethylendiamin, 1,2-, 1,3-Propylen-diamin, N-Methyl-propylendiamin-1,3 und/oder N,N'-Dimethylethylendiamin.
   Als zusätzliche Kettenverlängerungsmittel finden vorzugsweise Verwendung Alkandiole mit 2 bis 10 C-Atomen im Alkylenrest, insbesondere Butandiol-1,4 und/oder Dialkylenglykole mit 4 bis 8 Kohlenstoffatomen.
e) Geeignete Katalysatoren, welche insbesondere die Reaktion zwischen den NCO-Gruppen der Diisocyanate (a) und den Hydroxylgruppen der Aufbaukomponenten (b) und (c) beschleunigen, sind die nach dem Stand der Technik bekannten und üblichen tertiären Amine, wie z.B. Triethylamin, Dimethylcyclohexylamnin, N-Methylmorpholin, N,N'-Dimethylpiperazin, 2-(Dimethylaminoethoxy)-ethanol, Diazabicyclo-(2,2,2)-octan und ähnliche sowie insbesondere organische Metallverbindungen wie Titansäureester, Eisenverbindungen wie z.B. Eisen-(III)-acetylacetonat, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Die Katalysatoren werden üblicherweise in Mengen von 0,0001 bis 0,1 Gew.-Teilen pro 100 Gew.-Teile Polyhydroxylverbindung (b) eingesetzt.
f) Neben Katalysatoren können den Aufbaukomponenten (a) bis (d) auch übliche Hilfsmittel und/oder Zusatzstoffe (e) hinzugefügt werden. Genannt seien beispielsweise oberflächenaktive Substanzen, Schaumstabilisatoren, Zellregler, Flammschutzmittel, Keimbildungsmittel, Oxidationsverzögerer, Stabilisatoren, Gleit- und Entformungshilfen, Farbstoffe und Pigmente, Inhibitoren, Stabilisatoren gegen Hydrolyse, Licht, Hitze oder Verfärbung, Schutzmittel gegen mikrobiellen Abbau, Farbstoffe, anorganische und/oder organische Füllstoffe, Verstärkungsmittel und Weichmacher.

Nähere Angaben über die oben genannten Hilfsmittel- und Zusatzstoffe sind der Fachliteratur zu entnehmen.

Alle in dieser Schrift genannten Molekulargewichte weisen die Einheit [g/mol] auf.

Die Herstellung von TPUs kann nach den bekannten Verfahren im one-shot Verfahren kontinuierlich auf Bandanlagen oder mit Reaktionsextrudern sowie diskontinuierlich im Gießverfahren als auch nach dein bekannten Prepolymerprozeß erfolgen. Bei diesen Verfahren können die zur Reaktion kommenden Komponenten (a), (b) und gegebenenfalls (c) nacheinander oder gleichzeitig miteinander vermischt werden, wobei die Reaktion unmittelbar einsetzt.

Bevorzugt wird die Umsetzung im one-shot Verfahren durchgeführt.

Wie bereits dargelegt wurde, kann das Reaktionsgemisch enthaltend (a), (b), (c) und gegebenenfalls (e) und/oder (f) nach dem Extruderverfahren oder vorzugsweise nach dein Bandverfahren umgesetzt werden. Im einzelnen wird beim Bandverfahren auf folgende Weise verfahren:

Die Aufbaukomponenten (a) bis (c) sowie gegebenenfalls (e) und/oder (f) werden bei Temperaturen oberhalb des Schmelzpunktes der Aufbaukomponenten (a) bis (c) mit Hilfe eines Mischkopfes kontinuierlich gemischt. Die Reaktionsmischung wird auf einen Träger, vorzugsweise Förderband, aufgebracht und durch eine temperierte Zone geführt. Die Reaktionstemperatur in der temperierten Zone kann 60 bis 200°C, vorzugsweise 100 bis 180°C betragen und die Verweilzeit liegt im allgemeinen bei 0,05 bis 0,5 Stunden, vorzugsweise 0,1 bis 0,3 Stunden. Nach beendeter Reaktion läßt man das TPU abkühlen und zerkleinert oder granuliert es anschließend.

Beim Extruderverfahren werden die Aufbaukomponenten (a) bis (c) sowie gegebenenfalls (e) und (f) einzeln oder als Gemisch in den Extruder eingeführt, z.B. bei Temperaturen von 100 bis 250°C, vorzugsweise 140 bis 220°C zur Reaktion gebracht, das erhaltene TPU wird extrudiert, abgekühlt und granuliert.

Die Verarbeitung der erfindungsgemäß hergestellten TPUs, die üblicherweise als Granulat oder in Pulverform vorliegen, zu den gewünschten Kabelummantelungen, Fasern, Formteile, Verkleidungen im Automobilen, Dichtungen, Kabelstecker, Faltenbälge, Schläuche, Folien, Rollen, Schleppkabel, Riemen oder Dämpfungselemente erfolgt nach üblichen Verfahren, wie z. B. Spritzguß oder Extrusion.
Werden nach dem erfindungsgemäßen Verfahren vernetzte Polyisocyanat-Polyadditionsprodukte, beispielsweise weiche, halbharte oder harte, kompakte oder zellige, beispielsweise mikrozellige Polyurethane und/oder Polyisocyanurate hergestellt, so können bevorzugt auch Verbindungen (b) mit einer Funktionalität von 2 bis 6, Vernetzungsmittel (d) mit einer Funktionalität von 3 bis 6 und einem Molekulargewicht §≤§450, bevorzugt 60 bis 300, und im Falle von geschäumten Polyurethan- und/oder Polyisocyanuratprodukten auch allgemein bekannte Treibmittel, beispielsweise Wasser, Fluorkohlenwasserstoffe und/oder (cyclo)Alkane mit einem Siedepunkt bei 1013 mbar von üblicherweise <50°C eingesetzt werden. Die Herstellung dieser Produkte ist allgemein bekannt.

Die nach den erfindungsgemäßen Verfahren herstellbaren Polyisocyanat-Produkte, insbesondere die thermoplastischen Polyurethane weisen die gewünscht erhöhte Wärmeformbeständigkeit auf.

Die erfindungsgemäßen Vorteile sollen anhand der folgenden Beispiele dargestellt werden.

### Herstellung der TPUs

Die Herstellung der TPU erfolgte mit den in Tabelle 1 dargestellten Ausgangskomponenten. Die gegenüber Isocyanaten reaktiven Verbindungen wurden in flüssigem Zustand bei einer Temperatur von 100 °C, im Falle des BHMB 110 °C, vorgelegt und das auf eine Temperatur von 50 °C geheizte Isocyanat zugegeben, wobei die Komponenten intensiv miteinander verrührt wurden. Nach Erreichen einer Temperatur von 115 °C wurde das exotherm reagierende Gemisch in eine Schale gegossen, in der es bei einer Heiztemperatur von 120 °C und einer Verweilzeit von 20 min aushärtete. Nach einer Temperung für 24 Stunden bei 100 °C wurde das Material granuliert und bei einer Temperatur von 210 °C, bei einer Verwendung von BHMB 230 °C, zu Prüfkörpern spritzgegossen.

**Tabelle 1**

| Beispiel | 1 | 2 | 3 | 4 | 5 | 6 | 7 |
|---|---|---|---|---|---|---|---|
| 1,3-Propandiol [g] | - | 97,5 | 98,7 | 99,9 | 101,1 | - | - |
| BHMB [g] | - | - | - | - | - | - | 115,5 |
| HQEE [g] | - | - | - | - | - | 130,3 | - |
| 1,4-Butandiol [g] | 108,1 | - | - | - | - | - | - |
| Poly(ε-caprolacton), Molekulargewicht 2000 [g] | 1000 | 1000 | 1000 | 1000 | 1000 | 1000 | 1000 |
| Elastostab® H01 [g] | 8 | 8 | 8 | 8 | 8 | 8 | 8 |
| 4,4'-MDI [g] | 456 | 451 | 469 | 487 | 505 | 313 | 360 |
| Kennzahl | 106 | 100 | 103 | 106 | 109 | 106 | 106 |
| Elastostab®: Hydrolysestabilisator auf Basis eines Carbodimides (Elastogran GmbH | | | | | | | |

Die Beispiele 4 und 5 stellen erfindungsgemäße Beispiele dar. Die in den Beispielen hergestellten TPUs wurden auf ihre Eigenschaften, insbesondere im Hinblick auf die Wärmeformbeständigkeit, überprüft. Die Eigenschaften der Prüfkörper sind in der Tabelle 2 angegeben.

**Tabelle 2**

| Beispiel | Dichte | Shore A Härte | Vicat-Temperatur | Abrieb | Weiterreißwiderstand | Zugfestigkeit | Reißdehnung |
|---|---|---|---|---|---|---|---|
| | [g/cm³] | | [°C] | [mm³] | [N/mm] | [N/mm²] | [%] |
| 1 | 1,18 | 84 | 144 | 35 | 62 | 44 | 510 |
| 2 | 1,17 | 82 | 138 | 25 | 58 | 41 | 420 |
| 3 | 1,17 | 82 | 156 | 25 | 56 | 42 | 400 |
| 4 | 1,18 | 84 | 160 | 27 | 67 | 44 | 480 |
| 5 | 1,18 | 84 | 160 | 24 | 62 | 48 | 510 |
| 6 | 1,18 | 83 | 128 | 45 | 52 | 44 | 590 |
| 7 | 1,18 | 81 | 144 | 47 | 59 | 30 | 580 |

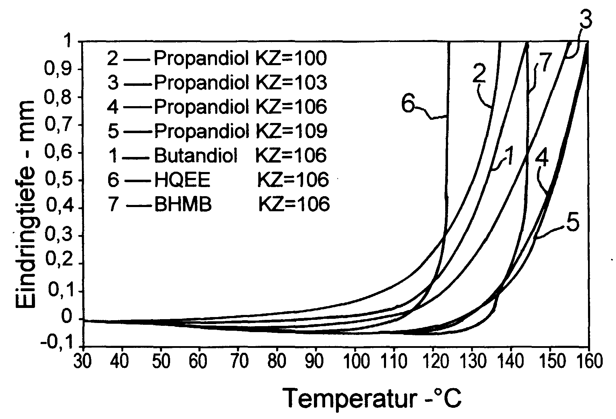

Die deutlich verbesserten Wärmeformbeständigkeiten der erfindungsgemäßen Proben 4 und 5 werden vor allem anhand der Vicat-Temperaturen (siehe auch Figur 1) deutlich. Die Vicat-Temperatur gibt an, bei welcher Temperatur eine mit einem Gewicht von 10 N belastete Nadel, die eine Auflagefläche von 1 mm² hat, 1 mm tief in die Probe, die mit 120 °C/h aufgeheizt wird, eingedrungen ist. Diese Messung erfolgt nach DIN EN ISO 306.

Die Eigenschaften der erfindungsgemäßen TPUs sind in der Tabelle 2 dargestellt. Die eingangs dargestellte Beurteilung des Standes der Technik wird durch diese Daten unterstützt. Lediglich die erfindungsgemäß hergestellten TPUs weisen eine Wärmeformbeständigkeit auf, die höchsten Ansprüchen genügt. Sie ist deutlich gegenüber der der Vergleichsproben verbessert. Zusätzlich dazu weisen die Proben 4 und 5 deutlich verbesserte Werte für den Abrieb und Weiterreißwiderstand auf, insbesondere im Vergleich zu den Proben, die ausschließlich mit aromatischen Kettenverlängerem hergestellt wurden (Beispiele 6 und 7). Die Herstellung der TPUs bei einer bekannten, niedrigen Kennzahl führt zu einer Verschlechterung der Wärmestandfestigkeit, der Zugfestigkeit, des Weiterreißwiderstandes und der Reißdehnung (Beispiele 2 und 3). Ausschließlich mit 1,4-Butandiol als Kettenverlängerungsmittel hergestelltes TPU zeigt insbesondere eine schlechtere Wärmestandfestigkeit und einen erhöhten Abrieb.

Die verbesserte Wärmeformbeständigkeit durch Verwendung höherer Kennzahlen bei Einsatz des Kettenverlängerers 1,3-Propandiol läßt sich auch aus dem Verlauf der Vicatkurve erkennen (s. Figur 1).

Deutlich ist zu erkennen, daß das Eindringen der Prüfnadel im Falle höherer Kennzahlen zu höheren Temperaturen verschoben wird.

Somit kann festgestellt werden, daß die Aufgabe der vorliegenden Erfindung, Polyisocyanat-Polyadditionsprodukte, insbesondere TPUs, mit verbesserten Eigenschaften, insbesondere einer verbesserten Wärmestandfestigkeit bereitzustellen, durch die erfindungsgemäße technische Lehre gelöst werden konnte. Die erfindungsgemäßen TPUs weisen im Vergleich mit bekannten TPUs deutlich verbesserte Eigenschaften auf.

## Patentansprüche

1. Verfahren zur Herstellung von Polyisocyanat-Polyadditionsprodukten durch Umsetzung von (a) Isocyanaten mit (b) gegenüber Isocyanaten reaktiven Verbindungen mit einem Molekulargewicht von 451 bis 8000 in Gegenwart von (c) Kettenverlängerungsmitteln und gegebenenfalls (d) Vernetzungsmitteln, (e) Katalysatoren und/oder (f) üblichen Hilfs- und/oder Zusatzstoffen, dadurch gekennzeichnet, daß man als (c) Kettenverlängerungsmittel 1,3- und/oder 1,2-Propandiol einsetzt und die Umsetzung bei einer Kennzahl von ≥§104 durchführt.

2. Verfahren zur Herstellung von thermoplastischen Polyisocyanat-Polyadditionsprodukten durch Umsetzung von (a) Isocyanaten mit (b) gegenüber Isocyanaten reaktiven Verbindungen mit einem Molekulargewicht von 451 bis 8000 und einer mittleren Funktionalität von 1,8 bis 2,6 in Gegenwart von (c) Kettenverlängerungsmitteln, (e) Katalysatoren und/oder (f) üblichen Hilfs- und/oder Zusatzstoffen, dadurch gekennzeichnet, daß man als (c) Kettenverlängerungsmittel 1,3- und/oder 1,2-Propandiol einsetzt und die Umsetzung bei einer Kennzahl von ≥§104 durchführt.

3. Verfahren nach Anspruch 1, dadurch gekennzeichnet, daß man zusätzlich zum 1,3- und/oder 1,2-Propandiol aromatische Kettenverlängerer einsetzt.

4. Verfahren nach Anspruch 3, dadurch gekennzeichnet, daß man als aromatischen Kettenverlängerer 1,4-Bis-(hydroxymethyl)-benzol verwendet.

5. Polyisocyanat-Polyadditionsprodukte erhältlich durch ein Verfahren gemäß Anspruch 1.

6. Thermoplastische Polyisocyanat-Polyadditionsprodukte erhältlich durch ein Verfahren gemäß Anspruch 2.

7. Verwendung von thermoplastischen Polyisocyanat-Polyadditionsprodukten gemäß Anspruch 6 als Kabelummantelungen, Fasern, Formteile, Verkleidungen in Automobilen, Dichtungen, Kabelstecker, Faltenbälge, Schläuche, Folien, Rollen, Schleppkabel, Riemen oder Dämpfungselemente.

8. Kabelummantelungen, Fasern, Formteile, Verkleidungen in Automobilen, Dichtungen, Kabelstecker, Faltenbälge, Schläuche, Folien, Rollen, Schleppkabel, Riemen oder Dämpfungselemente enthaltend thermoplastische Polyisocyanat-Polyadditionsprodukte gemäß Anspruch 6.
